# EUROPÄISCHE PATENTSCHRIFT

(11) **EP 3 913 260 B1**
(45) Veröffentlichungstag und Bekanntmachung des Hinweises auf die Patenterteilung: **13.12.2023**
(21) Anmeldenummer: 21174642.5
(22) Anmeldetag: 19.05.2021
(51) Int. Cl.: F16H 57/02, H02K 5/173, H02K 7/00, F16H 57/00, H02K 7/116, F16H 1/32

(54) **ANKOPPELVORRICHTUNG ZUM DREHMOMENTÜBERTRAGENDEN ANKOPPELN EINES ANTRIEBSMOTORS AN EIN GETRIEBE**
COUPLING DEVICE FOR TORQUE-TRANSMITTING COUPLING OF A DRIVE MOTOR TO A TRANSMISSION
DISPOSITIF D'ACCOUPLEMENT DESTINÉ À L'ACCOUPLEMENT À TRANSFERT DE COUPLE D'UN MOTEUR D'ENTRAINEMENT À UNE BOITE DE VITESSES

(30) Priorität: 20.05.2020 LU 101811
(43) Veröffentlichungstag der Anmeldung: 24.11.2021
(73) Patentinhaber: Nabtesco Precision Europe GmbH, 40472 Düsseldorf (DE)
(72) Erfinder: Pawliszak, Marco, 45525 Hattingen (DE); Henzel, Ruslan, 40878 Ratingen (DE)
(74) Vertreter: Hoffmann, Jürgen

(56) Entgegenhaltungen:
- DE-A1- 10 312 941
- DE-A1-102019 100 452
- US-A1- 2004 038 766
- US-B2- 7 337 695

## Beschreibung

Die Erfindung betrifft eine Ankoppelvorrichtung zum drehmomentübertragenden Ankoppeln einer drehmomenteinspeisenden Antriebsvorrichtung, insbesondere eines Antriebsmotors, an ein Getriebe, insbesondere an ein Zykloidgetriebe.

Ankoppelvorrichtungen dieser Art dienen dazu, gemeinsam mit einem Getriebe ein Getriebesystem zu bilden, um im Ergebnis eine drehmomenteinspeisende Antriebsvorrichtung, beispielsweise einem Antriebsmotor, an ein anzutreibendes System anzukoppeln. Hierbei muss einerseits eine Abtriebswelle der Antriebsvorrichtung mit einem Eingang des anzutreibenden Systems wirkverbunden werden und muss außerdem zusätzlich eine drehmomentabstützende Verbindung eines Antriebs-Drehmomentabstützelements der Antriebsvorrichtung, beispielsweise eines Antriebsgehäuses eines Antriebsmotors, zu einem Drehmomentabstützelement des anzutreibenden Systems (zumeist ein Gehäuse oder eine Halterung) hergestellt werden.

Die bekannten Ankoppelvorrichtungen weisen zumeist einen Flansch mit Durchgangsbohrungen auf, wobei durch einige der Durchgangsbohrungen Befestigungsschrauben geführt sind, um eine drehmomentabstützende Verbindung zu einem Getriebe-Drehmomentabstützelement herzustellen. Außerdem sind können durch weitere Durchgangsbohrungen des Flanschs Halteschrauben geführt werden, mittels denen das gesamte Getriebesystem mit dem Drehmomentabstützelement des anzutreibenden Systems verbunden wird.

Es gibt auch Vorrichtungen, bei denen eine Antriebsvorrichtung, unmittelbar an ein Getriebe angekoppelt ist. Beispielsweise offenbart DE 10 2019 100 452 A1 eine Radantriebsvorrichtung mit einem Motor, der unmittelbar an ein Untersetzungsgetriebe angekoppelt ist. Aus US 2004/038766 A1 ist ein Getriebemotor bekannt, der zwei hintereinander und unmittelbar an einen Antriebsmotor angekoppelte Planetengetriebe beinhaltet.

Das Dokument US 2004/038766A1 offenbart eine Ankoppelvorrichtung zwischen einem Getriebe und einem Elektromotor.

Das Dokument DE10312941 B4 offenbart eine Übertragungswelle.

Es ist eine Aufgabe der vorliegenden Erfindung, eine Ankoppelvorrichtung anzugeben, die sicherer und zuverlässiger einsetzbar ist.

Die Aufgabe wird durch eine Ankoppelvorrichtung gemäß Anspruch 1 gelöst.

Es hat sich in der Praxis gezeigt, dass es zuweilen zu Beschädigungen kommt, wenn versucht wird, ein installiertes Getriebesystem, das ein Getriebe und eine Ankoppelvorrichtung aufweist, von einem anzutreibenden System zu lösen, weil versehentlich auch die Verbindung der Ankoppelvorrichtung zu dem Getriebe gelöst wird. Dies geschieht zumeist dann, wenn der Monteur unreflektiert sämtliche Schrauben löst, die durch den Flansch der Ankoppelvorrichtung verlaufen. Hierbei werden nämlich nicht nur die Halteschrauben zum Befestigen an dem anzutreibenden System gelöst, sondern auch die Befestigungsschrauben gelöst, die die Ankoppelvorrichtung mit dem Getriebe drehmomentabstützend verbinden. Ein Lösen der Ankoppelvorrichtung von dem Getriebe hat zumeist unmittelbar zur Folge, dass das Schmiermittel ausläuft und eine Reparatur am Anwendungsort wegen der dortigen Umstände, insbesondere wegen schlechter Zugänglichkeit und/oder Verschmutzung, in den allermeisten Fällen nicht möglich ist, so dass zumeist eine Reparatur beim Hersteller erforderlich wird, bevor das Getriebesystem wieder eingebaut werden kann.

Bei dem erfindungsgemäßen Getriebesystem ist ein versehentliches Lösen der Verbindung der Ankoppelvorrichtung zu dem Getriebe ausgeschlossen. Dies wird erfindungsgemäß dadurch erreicht, dass das Befestigungsmittel, das insbesondere mehrere Befestigungsschrauben aufweisen kann, von dem anzutreibenden System verdeckt ist und damit nicht mehr unmittelbar zugänglich ist, nachdem das Ankoppelvorrichtungsgehäuse zusammen mit einem Getriebe an ein anzutreibendes System angekoppelt wurde. Insbesondere kann beispielsweise vorgesehen sein, dass die Schraubenköpfe der Befestigungsschrauben nach dem Ankoppeln an ein anzutreibendes System verdeckt und damit unzugänglich sind. Die Gefahr, das Befestigungsmittel bei dem Versuch des Abmontierens des gesamten Getriebesystems von dem anzutreibenden System zu lösen besteht nämlich nicht, weil das Befestigungsmittel erfindungsgemäß allenfalls erst nach dem Lösen des gesamten Getriebesystems von dem anzutreibenden System zugänglich ist.

Es ist erfindungsgemäß vorteilhaft vorgesehen, dass das Befestigungsmittel, insbesondere die Schraubenköpfe von Befestigungsschrauben, derart angeordnet sind, dass sie nach dem Ankoppeln der Ankoppelvorrichtung an ein anzutreibendes System von dem anzutreibenden System verdeckt werden und damit nicht mehr unmittelbar zugänglich sind. Hierbei kann insbesondere vorteilhaft vorgesehen sein, dass es nur eine einzige Möglichkeit der Ankopplung an ein anzutreibendes System gibt.

Insbesondere kann die Ankoppelvorrichtung vorteilhaft derart ausgebildet sein, dass das Befestigungsmittel von einer Außenseite des Ankoppelvorrichtungsgehäuses nicht mehr unmittelbar zugänglich ist, nachdem die Ankoppelvorrichtung, insbesondere zusammen mit einem Getriebe, an einem anzutreibenden System befestigt wurde. Auf diese Weise ist besonders wirkungsvoll vermieden, dass ein Monteur, der versucht, das Getriebesystem von einem anzutreiben System zu lösen, überhaupt an die Befestigungsmittel gelangt.

Bei einer besonderen Ausführung weist das Ankoppelvorrichtungsgehäuse einen Zwischenabschnitt auf, der zwischen einem ersten Befestigungsabschnitt, der im Einbauzustand mit dem Antriebs-Drehmomentabstützelement unmittelbar verbunden ist, und einem zweiten Befestigungsabschnitt, der im Einbauzustand mit dem Getriebe-Drehmomentabstützelement unmittelbar verbunden ist, angeordnet ist. Der erste Befestigungsabschnitt und der zweite Befestigungsabschnitt können hierbei insbesondere an einander gegenüberliegenden, axialen Enden des Ankoppelvorrichtungsgehäuses angeordnet sein. Bei einer solchen Vorrichtung kann insbesondere vorteilhaft vorgesehen sein, dass das Befestigungsmittel von einer Außenseite des Zwischenabschnitts nicht mehr unmittelbar zugänglich ist, nachdem die Ankoppelvorrichtung zusammen, insbesondere zusammen mit einem Getriebe, an einem anzutreibenden System befestigt wurde. Dies ist insbesondere von Vorteil, wenn die Außenseite des Zwischenabschnitts ohnehin die einzige im montierten Zustand zugängliche Außenfläche der Ankoppelvorrichtung ist.

Das Befestigungsmittel kann mehrteilig ausgebildet sein und insbesondere wenigstens eine Befestigungsschraube aufweisen. Ganz allgemein kann vorteilhaft vorgesehen sein, dass das Ankoppelvorrichtungsgehäuse wenigstens eine, insbesondere stirnseitig beginnende, Gewindebohrung aufweist, in die die Befestigungsschraube einschraubbar ist. Insbesondere können mehrere Gewindebohrungen vorhanden sein, in die jeweils eine Befestigungsschraube einschraubbar ist. Die Gewindebohrung kann insbesondere in Axialrichtung verlaufen, um ein einfaches Befestigen zu ermöglichen. Vorzugsweise weist das Befestigungsmittel zumindest zwei Befestigungsschrauben auf, die in Gewindebohrungen eingeschraubt werden, die entlang des stirnseitigen Umfangs des Ankoppelgehäuses, insbesondere in gleichen Abständen zueinander, angeordnet sind.

Bei einer besonderen Ausführung weist das Ankoppelvorrichtungsgehäuse mehrere weitere Gewindebohrungen auf, die insbesondere entlang eines stirnseitigen Umfangsrandes des Ankoppelvorrichtungsgehäuses angeordnet sein können. In die weiteren Gewindebohrungen können insbesondere Halteschrauben eingeschraubt werden, um ein Drehmomentabstützelement des anzutreibenden Systems mit dem Getriebesystem zu verbinden. Das Drehmomentabstützelement des anzutreibenden Systems kann beispielsweise eine Halterung oder ein Gehäuse mit Durchgangsbohrungen sein, durch die die Halteschrauben gesteckt und anschließend in die weiteren Gewindebohrungen eingeschraubt werden können.

Bei einer besonders vorteilhaften Ausführung ist das Ankoppelvorrichtungsgehäuse rotationssymmetrisch ausgebildet. Dies hat den ganz besonderen Vorteil einer besonders kompakten Bauweise. Ebenfalls im Hinblick auf eine möglichst kompakte Bauweise kann das Ankoppelvorrichtungsgehäuse zumindest außen eine Glockenform oder eine Kegelstumpfform aufweisen. Eine solche Form hat den weiteren Vorteil, dass ein einfaches Reinigen ermöglicht ist.

Bei einer ganz besonders vorteilhaften Ausführung weist das Ankoppelvorrichtungsgehäuse in einer Querschnittsebene entlang der Axialrichtung eine stetig verlaufende Außenkontur auf. Insbesondere kann die Außenkontur eine zusammenhängende Kurve sein, die keine Sprünge macht, keine Abwinklungen aufweist und die man ohne Abzusetzen zeichnen kann. Eine solche Ausführung kann besonders einfach sauber gehalten und gereinigt werden, was insbesondere bei Anwendungen von Vorteil ist, bei denen das Ankoppelvorrichtungsgehäuse mit empfindlichen Gütern, wie beispielsweise Lebensmitteln, in Berührung kommen kann. In dieser Hinsicht kann das Ankoppelvorrichtungsgehäuse alternativ oder zusätzlich derart ausgebildet sein, dass es außenseitig, insbesondere in dem Zwischenabschnitt, frei von Kanten und/oder frei von Vorsprüngen und/oder frei von Vertiefungen ist.

Hinsichtlich des Materials, aus dem das Ankoppelvorrichtungsgehäuse hergestellt ist, gibt es keine grundsätzlichen Beschränkungen. Allerdings muss das Ankoppelvorrichtungsgehäuse ausreichend stabil ausgebildet sein, um die auftretenden Drehmomente abstützen zu können. Das Ankoppelvorrichtungsgehäuse kann vorteilhaft insbesondere aus Stahl oder aus Titan oder aus Edelstahl oder aus Aluminium hergestellt sein. Insbesondere kann das Ankoppelvorrichtungsgehäuse aus einem Material hergestellt sein, das Stahl oder Titan oder Edelstahl oder Aluminium beinhaltet.

Bei einer ganz besonders vorteilhaften Ausführung ist das Ankoppelvorrichtungsgehäuse wenigstens auf der Außenseite beschichtet oder eloxiert oder brüniert. Eine solche Ausführung ist besonders gut gegen äußere Einflüsse, wie Beschädigung und Verschmutzung, geschützt.

Bei einer ganz besonders vorteilhaften Ausführung ist das Ankoppelvorrichtungsgehäuse derart geformt, dass nachträglich endseitig ein Flansch ausbildbar ist, durch den die Gewindebohrungen als Durchgangsbohrungen verlaufen. Das Ausbilden eines Flansches kann bei einer solchen Ausführung beispielsweise durch das Einbringen wenigstens einer Ausnehmung, insbesondere eines umlaufenden Falzes, erfolgen. Das Einbringen einer Ausnehmung ist beispielsweise durch spanende Verfahren, wie Drehen oder Fräsen, möglich. Der auf diese Weise hergestellte Flansch kann dazu benutzt werden, dass Getriebesystem, das das umgerüstete Ankopplungsgehäuse aufweist, an ein anzutreibendes System anzukoppeln.

Der Flansch kann hierbei Durchgangsbohrungen aufweisen, die durch die weiteren Gewindebohrungen gebildet sind. Aus diesem Grund ist es von Vorteil die Ausnehmung (bzw. die Ausnehmungen) derart einzubringen, dass er (bzw. sie) die weiteren Gewindebohrungen schneidet (bzw. schneiden). Die Gewinde der weiteren Gewindebohrungen können vorteilhaft (insbesondere durch Ausbohren) entfernt werden, damit Halteschrauben hindurch gesteckt werden können. Eine derart umgerüstete Ankoppelvorrichtung hat den besonderen Vorteil, dass sie auch an anzutreibende Systeme angekoppelt werden kann, bei denen zwingend vorgesehen ist, dass die Halteschrauben von der Getriebesystemseite (beispielsweise in eigene Gewindebohrungen des anzutreibenden Systems 20) eingeschraubt werden. Die derart umgerüstete Ankoppelvorrichtung kann insbesondere auch als Ersatz für eine herkömmliche Ankoppelvorrichtung dienen.

Erfindungsgemäß weist die Übertragungswelle ein Abtriebsende auf, das dazu ausgebildet und bestimmt ist, mit einem Getriebeeingang des Getriebes wirkverkoppelt zu werden. Beispielsweise kann das Abtriebsende eine Verzahnung aufweisen, die mit wenigstens einem Zahnrad des Getriebes in Zahneingriff steht. Insbesondere kann es sich bei dem Getriebe um ein Zykloidgetriebe handeln. Bei einer solchen Ausführung kann vorteilhaft vorgesehen sein, dass eine Außenverzahnung des Abtriebsendes der Übertragungswelle in kämmendem Zahneingriff mit Außenverzahnungen der Exzenterwellen des Zykloidgetriebes steht, wenn die Ankoppelvorrichtung an das Zykloidgetriebe angekoppelt ist.

Insbesondere kann die Übertragungswelle vorteilhaft derart ausgebildet und angeordnet sein, dass beim Herstellen einer Verbindung des Ankoppelvorrichtungsgehäuses mit einem Getriebe-Drehmomentabstützelement automatisch, insbesondere nach dem Prinzip einer Steckverbindung, eine Wirkverbindung der Übertragungswelle mit dem Getriebe hergestellt wird.

Die Übertragungswelle weist erfindungsgemäß außerdem ein Antriebsende auf, das dazu ausgebildet und bestimmt ist, insbesondere kraftschlüssig, mit einer Abtriebswelle einer drehmomenteinspeisenden Antriebsvorrichtung drehfest verbunden zu werden. Hierzu kann das Antriebsende beispielsweise als geschlitzte Hohlwelle ausgebildet sein, in die die Abtriebswelle einer drehmomenteinspeisenden Antriebsvorrichtung, beispielsweise die Abtriebswelle eines elektrischen Antriebsmotors, eingesteckt und mittels eines Klemmrings festgeklemmt werden kann, um eine drehfeste Verbindung herzustellen.

Vorzugsweise ist die Übertragungswelle mittels wenigstens eines Wälzlagers rotierbar gelagert. Hierdurch ist vorteilhaft eine verlustfreie Drehmomentübertragung gewährleistet.

Von ganz besonderem Vorteil ist ein Getriebesystem, das ein Getriebe und eine erfindungsgemäße Ankoppelvorrichtung beinhaltet. Das Getriebesystem kann vorteilhaft als eine vormontierte und einsatzfertige Baueinheit hergestellt werden, die am Einsatzort montiert werden kann, ohne hierfür Bauteile des Getriebesystems wieder demontieren zu müssen.

Von ganz besonderem Vorteil ist ein Antriebssystem, das eine drehmomenteinspeisende Antriebsvorrichtung und ein erfindungsgemäßes Getriebesystem beinhaltet. Die Antriebsvorrichtung kann ein, insbesondere elektrischer, Antriebsmotor sein. Hierbei kann insbesondere vorgesehen sein, dass der Antriebsmotor unmittelbar an die Ankoppelvorrichtung angekoppelt ist.

Alternativ ist es beispielsweise auch möglich, dass die Antriebsvorrichtung einen, insbesondere elektrischen, Antriebsmotor aufweist, der lediglich mittelbar, nämlich beispielsweise über ein weiteres Getriebe, an die Ankoppelvorrichtung angekoppelt ist. Insoweit kann die Antriebsvorrichtung ganz allgemein ein weiteres Getriebe aufweisen, das unmittelbar an die Ankoppelvorrichtung angekoppelt ist. Insbesondere kann die Antriebsvorrichtung ein Getriebemotor sein, der das weitere Getriebe beinhaltet, oder einen Getriebemotor, der das weitere Getriebe aufweist, aufweisen.

Das Antriebssystem kann vorteilhaft als eine vormontierte und einsatzfertige Baueinheit hergestellt werden, die am Einsatzort montiert werden kann, ohne hierfür Bauteile des Antriebssystems wieder demontieren zu müssen.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: in einer Querschnittsdarstellung ein Ausführungsbeispiel eines erfindungsgemäßen Getriebesystems,
- Fig. 2: das Ausführungsbeispiel eines erfindungsgemäßen Getriebesystems in einer anderen Querschnittsebene, die die in Figur 1 gezeigte Querschnittsebene entlang der Mittelachse des Getriebesystems schneidet,

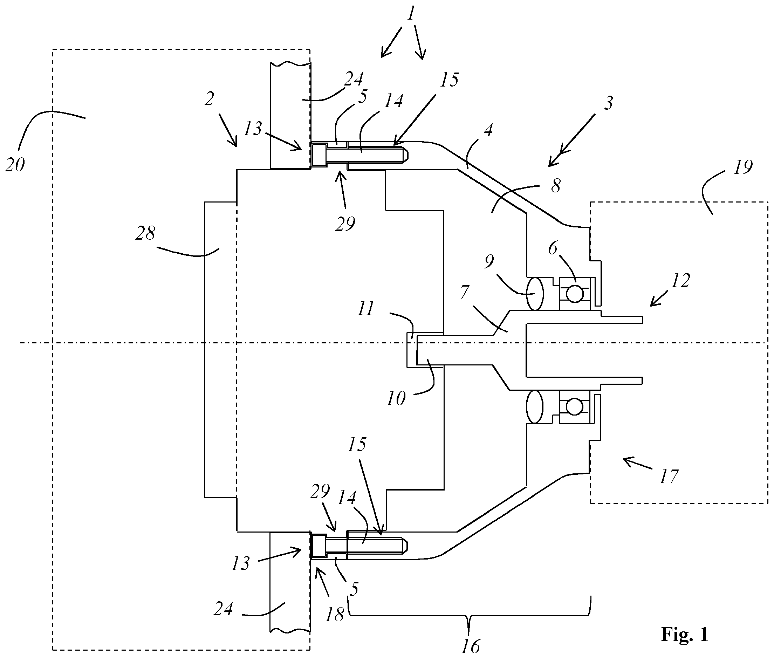

Figur 1 zeigt ein Ausführungsbeispiel eines erfindungsgemäßen Getriebesystems 1, das ein Getriebe 2 und ein Ausführungsbeispiel einer erfindungsgemäßen Ankoppelvorrichtung 3 beinhaltet. Das Getriebesystem 1 dient dazu, eine drehmomenteinspeisende Antriebsvorrichtung 19, beispielsweise einem Antriebsmotor, an ein anzutreibendes System 20 anzukoppeln. Hierbei werden genau genommen zwei Wirkverbindungen hergestellt. Zum einen wird eine (durch das Getriebe untersetzende oder übersetzende) Wirkverbindung eines (nicht dargestellten) Abtriebs der Antriebsvorrichtung 19 mit einem (nicht dargestellten) Antriebseingang des anzutreibenden Systems 20 hergestellt, wobei der Antriebseingang des anzutreibenden Systems 20 unmittelbar mit einem Getriebeabtrieb 28 des Getriebes 2 wirkverbunden wird. Zum anderen wird hierbei auch eine drehmomentabstützende Verbindung eines Antriebs-Drehmomentabstützelements (beispielsweise eines Antriebsgehäuses) der Antriebsvorrichtung 19 zu einem Drehmomentabstützelement, beispielsweise zu einer Haltevorrichtung 24 oder zu einem Gehäuse, des anzutreibenden Systems 20 hergestellt.

Die Ankoppelvorrichtung 3 weist ein Ankoppelvorrichtungsgehäuse 4 zum drehmomentabstützenden Verbinden eines Getriebe-Drehmomentabstützelements 5 des Getriebes 2 mit einem (nicht dargestellten) Antriebs-Drehmomentabstützelement, beispielsweise einem Antriebsgehäuse oder einem Motorflansch, einer Antriebsvorrichtung 20 auf. Das Ankoppelvorrichtungsgehäuse 4 ist rotationssymmetrisch ausgebildet. Innerhalb des Ankoppelvorrichtungsgehäuses 4 befindet sich eine mittels eines Wälzlagers 6 rotierbar gelagerte Übertragungswelle 7. Zur Abdichtung des Innenraums 8 der Ankoppelvorrichtung 1 ist zwischen dem Ankoppelvorrichtungsgehäuse 4 und der Übertragungswelle 7 eine Wellendichtung 9 angeordnet.

Die Übertragungswelle 7 weist ein Abtriebsende 10 auf, das mit einem Getriebeeingang 11 des Getriebes 2 wirkverkoppelt ist. Beispielsweise kann das Abtriebsende 10 eine Außenverzahnung aufweisen, die mit wenigstens einem Zahnrad des Getriebes in Zahneingriff steht. Insbesondere kann es sich bei dem Getriebe 2 um ein Zykloidgetriebe handeln. Bei einer solchen Ausführung kann vorteilhaft vorgesehen sein, dass eine Außenverzahnung des Abtriebsendes 10 der Übertragungswelle 7 in kämmendem Zahneingriff mit Außenverzahnungen der Exzenterwellen des Zykloidgetriebes steht.

Die Übertragungswelle 7 weist außerdem ein Antriebsende 12 auf, das dazu ausgebildet und bestimmt ist, kraftschlüssig mit einer (nicht dargestellten) Abtriebswelle einer drehmomenteinspeisenden Antriebsvorrichtung 19 drehfest verbunden zu werden. Hierzu ist das Antriebsende 12 als geschlitzte Hohlwelle ausgebildet, in die die Abtriebswelle einer drehmomenteinspeisenden Antriebsvorrichtung 19 eingesteckt und mittels eines (nicht dargestellten) Klemmrings festgeklemmt werden kann, um eine drehfeste Verbindung herzustellen.

Die Ankoppelvorrichtung 1 weist ein Befestigungsmittel 13 auf, das mehrere Befestigungsschrauben 14 beinhaltet. Die Befestigungsschrauben 14 verlaufen durch Durchgangsbohrungen 29 des flanschartig ausgebildeten Getriebe-Drehmomentabstützelements 5 und sind in Gewindebohrungen 15 des Ankoppelvorrichtungsgehäuses 4 eingeschraubt, wodurch das Getriebe-Drehmomentabstützelement 5 und das Ankoppelvorrichtungsgehäuse 4 drehfest miteinander verbunden sind. Die Gewindebohrungen 15 sind stirnseitig in dem Ankoppelvorrichtungsgehäuse 4 angeordnet und verlaufen in Axialrichtung.

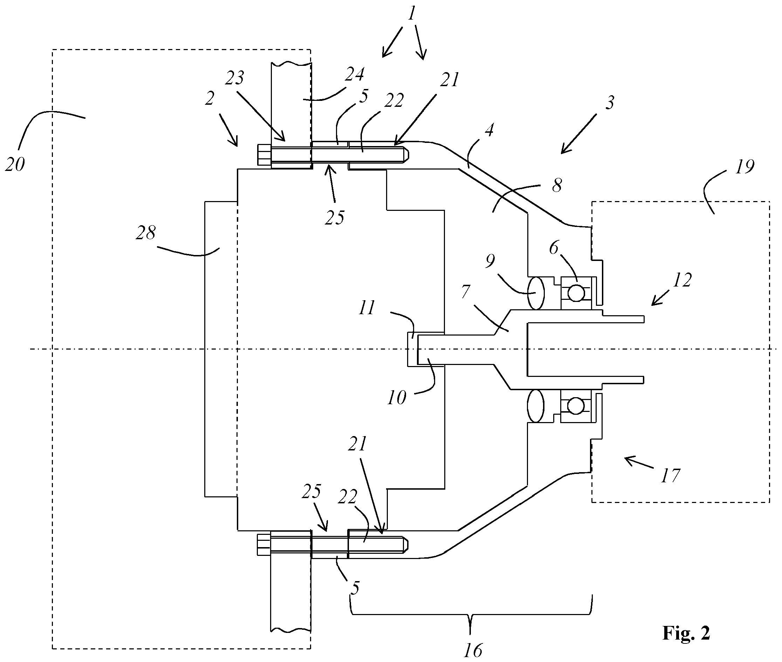

Die Befestigungsschrauben 14 sind nicht mehr unmittelbar zugänglich, nachdem das Getriebesystem 2 an das anzutreibende System 20 angekoppelt wurde. Vielmehr sind die Köpfe der Befestigungsschrauben 14 von der Haltevorrichtung 24 verdeckt, so dass ein versehentliches Lösen dieser Befestigungsschrauben wirkungsvoll verhindert ist. Insbesondere ist vorteilhaft vermieden, dass die Befestigungsschrauben 14 aufgrund einer Verwechselung mit den (in Figur 2 zu sehenden) Halteschrauben 22 versehentlich gelöst werden.

Das Ankoppelvorrichtungsgehäuse 4 weist einen Zwischenabschnitt 16 auf, der zwischen einem ersten Befestigungsabschnitt 17 und einem zweiten Befestigungsabschnitt 18 des Ankoppelvorrichtungsgehäuses 4 angeordnet ist. Der erste Befestigungsabschnitt 17 ist dazu ausgebildet und bestimmt, unmittelbar mit einer drehmomenteinspeisenden Antriebsvorrichtung 19 verbunden zu sein. Derzweite Befestigungsabschnitt 18 ist dazu ausgebildet und bestimmt, unmittelbar mit einem anzutreibenden System verbunden zu werden. Der erste Befestigungsabschnitt 17 wird unmittelbar mit dem (nicht dargestellten) Antriebs-Drehmomentabstützelement verbunden. Der zweite Befestigungsabschnitt 18 ist mit dem Getriebe-Drehmomentabstützelement 5 unmittelbar verbunden. Der erste Befestigungsabschnitt 17 und der zweite Befestigungsabschnitt 18 sind an einander gegenüberliegenden, axialen Enden des rotationssymmetrischen Ankoppelvorrichtungsgehäuses 4 angeordnet.

Das Ankoppelvorrichtungsgehäuse 4 weist eine Glockenform auf. Die Außenkontur verläuft stetig und/oder in Form einer zusammenhängenden Kurve, die keine Sprünge macht, keine Abwinklungen aufweist und die man ohne Abzusetzen zeichnen kann. Das Ankoppelvorrichtungsgehäuse 4 ist in dem Zwischenabschnitt 16 frei von Kanten, sowie frei von Vorsprüngen und Vertiefungen.

Die Befestigungsschrauben 14 sind bei diesem Ausführungsbeispiel als Zylinderschrauben mit Innensechskant oder Innenvielzahn (z.B. Torx) ausgebildet, deren Schraubenköpfe von der Getriebeseite aus mit einem Werkzeug zugänglich sind, solange das Ankoppelvorrichtungsgehäuse 4 noch nicht an einem anzutreibenden System 20 befestigt wurde.

Figur 2 zeigt schematisch das in Figur 1 dargestellte Getriebesystem 1, das mit einem anzutreibenden System 20 verbunden ist, in einer anderen Querschnittsebene, die relativ zu der in Figur 1 gezeigten Querschnittsebene um die Axialrichtung gedreht ist. Es ist zu erkennen, dass weitere Gewindebohrungen 21 vorhanden sind, in die Halteschrauben 22 eingeschraubt sind. Die Halteschrauben 22 verlaufen durch flanschartig angeordneten Durchgangsbohrungen 23 einer Haltevorrichtung 24 des anzutreibenden Systems 20 sowie durch entsprechende weitere Durchgangsbohrungen 25 des Getriebe-Drehmomentabstützelements 5 und dienen dazu, das Getriebesystem 1 drehmomentabstützend mit dem anzutreibenden System 20 zu verbinden.

### Bezugszeichenliste:

- 1: Getriebesystem
- 2: Getriebe
- 3: Ankoppelvorrichtung
- 4: Ankoppelvorrichtungsgehäuse
- 5: Getriebe-Drehmomentabstützelement
- 6: Wälzlager
- 7: Übertragungswelle
- 8: Innenraum
- 9: Wellendichtung
- 10: Abtriebsende
- 11: Getriebeeingang
- 12: Antriebsende
- 13: Befestigungsmittel
- 14: Befestigungsschraube
- 15: Gewindebohrungen
- 16: Zwischenabschnitt
- 17: erster Befestigungsabschnitt
- 18: zweiter Befestigungsabschnitt
- 19: drehmomenteinspeisende Antriebsvorrichtung
- 20: anzutreibendes System
- 21: weitere Gewindebohrungen
- 22: Halteschrauben
- 23: Durchgangsbohrungen
- 24: Haltevorrichtung
- 25: weitere Durchgangsbohrungen

- 28: Getriebeabtrieb
- 29: Durchgangsbohrungen

## Patentansprüche

1. Ankoppelvorrichtung (3) zum drehmomentübertragenden Ankoppeln einer drehmomenteinspeisenden Antriebsvorrichtung, insbesondere eines Antriebsmotors, an ein Getriebe (2), insbesondere an ein Zykloidgetriebe, wobei die Ankoppelvorrichtung (3) ein Ankoppelvorrichtungsgehäuse (4) zur drehmomentabstützenden Verbindung eines Getriebe-Drehmomentabstützelements (5), insbesondere eines Getriebegehäuses, des Getriebes mit einem Antriebs-Drehmomentabstützelement der Antriebsvorrichtung, insbesondere einem Antriebsgehäuse, sowie eine innerhalb des Ankoppelvorrichtungsgehäuses (4) rotierbar gelagerte Übertragungswelle (7) aufweist, wobei ein Befestigungsmittel (13), insbesondere die Schraubenköpfe von Befestigungsschrauben, zum Befestigen des Ankoppelvorrichtungsgehäuses (4) an dem Getriebegehäuse derart angeordnet ist oder anordenbar ist, dass es von einem anzutreibenden System (20) verdeckt ist und damit nicht mehr unmittelbar zugänglich ist, nachdem die Ankoppelvorrichtung (3), insbesondere zusammen mit dem Getriebe (2), an dem anzutreibenden System (20) befestigt wurde, **dadurch gekennzeichnet, dass** die Übertragungswelle ein Abtriebsende (10) aufweist, das dazu ausgebildet und bestimmt ist, mit einem Getriebeeingang (11) des Getriebes (2) wirkverkoppelt zu werden, und
die Übertragungswelle ein Antriebsende (12) aufweist, das dazu ausgebildet und bestimmt ist, insbesondere kraftschlüssig, mit einer Abtriebswelle der drehmomenteinspeisenden Antriebsvorrichtung drehfest verbunden zu werden.

2. Ankoppelvorrichtung (3) nach Anspruch 1, **dadurch gekennzeichnet, dass** das Befestigungsmittel (13) derart angeordnet ist, dass das Befestigungsmittel (13) von einer Außenseite des Ankoppelvorrichtungsgehäuses (4) nicht mehr unmittelbar zugänglich ist, nachdem die Ankoppelvorrichtung (3), insbesondere zusammen mit einem Getriebe (2), an einem anzutreibenden System befestigt wurde.

3. Ankoppelvorrichtung (3) nach Anspruch 1 oder 2, **dadurch gekennzeichnet, dass**
a. das Ankoppelvorrichtungsgehäuse (4) einen Zwischenabschnitt (16) aufweist, der zwischen einem ersten Befestigungsabschnitt (17), der im Einbauzustand mit dem Antriebs-Drehmomentabstützelement unmittelbar verbunden ist, und einem zweiten Befestigungsabschnitt, der im Einbauzustand mit dem Getriebe-Drehmomentabstützelement (5) unmittelbar verbunden ist, angeordnet ist, oder dass
b. das Ankoppelvorrichtungsgehäuse (4) einen Zwischenabschnitt aufweist, der zwischen einem ersten Befestigungsabschnitt (17), der im Einbauzustand mit dem Antriebs-Drehmomentabstützelement unmittelbar verbunden ist, und einem zweiten Befestigungsabschnitt (18), der im Einbauzustand mit dem Getriebe-Drehmomentabstützelement (5) unmittelbar verbunden ist, angeordnet ist, wobei der erste Befestigungsabschnitt (17) und der zweite Befestigungsabschnitt (18) an einander gegenüberliegenden, axialen Enden des Ankoppelvorrichtungsgehäuses (4) angeordnet sind, oder dass
c. das Ankoppelvorrichtungsgehäuse (4) einen Zwischenabschnitt aufweist, der zwischen einem ersten Befestigungsabschnitt (17), der im Einbauzustand mit dem Antriebs-Drehmomentabstützelement unmittelbar verbunden ist, und einem zweiten Befestigungsabschnitt (18), der im Einbauzustand mit dem Getriebe-Drehmomentabstützelement (5)unmittelbar verbunden ist, angeordnet ist, wobei das Befestigungsmittel (13) von einer Außenseite des Zwischenabschnitts (16) nicht mehr unmittelbar zugänglich ist, nachdem die Ankoppelvorrichtung (3) zusammen, insbesondere zusammen mit einem Getriebe (2), an einem anzutreibenden System (20) befestigt wurde.

4. Ankoppelvorrichtung (3) nach einem der Ansprüche 1 bis 3, **dadurch gekennzeichnet, dass** das Befestigungsmittel (13) wenigstens eine Befestigungsschraube (14) aufweist.

5. Ankoppelvorrichtung (3) nach Anspruch 4, **dadurch gekennzeichnet, dass**
a. das Ankoppelvorrichtungsgehäuse (4) wenigstens eine, insbesondere stirnseitig beginnende, Gewindebohrung (15) aufweist, in die die Befestigungsschraube (14) einschraubbar ist, oder dass
b. das Ankoppelvorrichtungsgehäuse (4) wenigstens eine, insbesondere stirnseitig beginnende, in Axialrichtung verlaufende Gewindebohrung (15) aufweist, in die die Befestigungsschraube (14) einschraubbar ist.

6. Ankoppelvorrichtung (3) nach einem der Ansprüche 1 bis 5, **dadurch gekennzeichnet, dass** das Ankoppelvorrichtungsgehäuse (4) mehrere weitere Gewindebohrungen (21) aufweist, die entlang eines stirnseitigen Umfangsrandes des Ankoppelvorrichtungsgehäuses (4) angeordnet sind.

7. Ankoppelvorrichtung (3) nach einem der Ansprüche 1 bis 6, **dadurch gekennzeichnet, dass**
a. das Ankoppelvorrichtungsgehäuse (4) rotationssymmetrisch ist, und/oder dass
b. .das Ankoppelvorrichtungsgehäuse (4) außen eine Glockenform oder eine Kegelstumpfform aufweist.

8. Ankoppelvorrichtung (3) nach einem der Ansprüche 1 bis 7, **dadurch gekennzeichnet, dass**
a. das Ankoppelvorrichtungsgehäuse (4) in einer Querschnittsebene entlang der Axialrichtung eine stetig verlaufende Außenkontur aufweist, und/oder dass
b. .das Ankoppelvorrichtungsgehäuse (4) frei von Kanten und/oder frei von Vorsprüngen und/oder frei von Vertiefungen ist.

9. Ankoppelvorrichtung (3) nach einem der Ansprüche 1 bis 8, **dadurch gekennzeichnet, dass**
a. das Ankoppelvorrichtungsgehäuse (4) aus Stahl oder aus Titan oder aus Edelstahl oder aus Aluminium hergestellt ist oder dass das Ankoppelvorrichtungsgehäuse (4) aus einem Material hergestellt ist, das Stahl oder Titan oder Edelstahl oder Aluminium beinhaltet, und/oder dass
b. das Ankoppelvorrichtungsgehäuse (4) wenigstens auf der Außenseite beschichtet ist oder eloxiert ist oder brüniert ist.

10. Ankoppelvorrichtung (3) nach einem der Ansprüche 5 bis 9, **dadurch gekennzeichnet, dass** das Ankoppelvorrichtungsgehäuse (4) derart geformt ist, dass, insbesondere durch Einbringen eines umlaufenden Falzes, nachträglich endseitig ein Flansch ausbildbar ist, durch den die Gewindebohrungen (15) und/oder die weiteren Gewindebohrungen (21) als Durchgangsbohrungen (23) verlaufen.

11. Ankoppelvorrichtung (3) nach einem der Ansprüche 1 bis 10, **dadurch gekennzeichnet, dass** die Übertragungswelle (7) mittels wenigstens eines Wälzlagers (6) rotierbar gelagert ist.

12. Getriebesystem, das ein Getriebe (2) und eine Ankoppelvorrichtung (3) nach einem der Ansprüche 1 bis 11 beinhaltet.

13. Getriebesystem nach Anspruch 12, **dadurch gekennzeichnet, dass** das Getriebe (2) ein Zykloidgetriebe ist.

14. Antriebssystem, das eine drehmomenteinspeisende Antriebsvorrichtung und ein Getriebesystem nach Anspruch 12 oder 13 beinhaltet.

15. Antriebssystem nach Anspruch 14, **dadurch gekennzeichnet, dass** die Antriebsvorrichtung ein, insbesondere elektrischer, Antriebsmotor ist oder dass die Antriebsvorrichtung einen, insbesondere elektrischen, Antriebsmotor aufweist oder dass die Antriebsvorrichtung ein Getriebemotor ist oder einen Getriebemotor aufweist

## Claims

1. Coupling device (3) for torque-transmitting coupling of a torque-input drive device, in particular a drive motor, to a transmission (2), in particular to a cycloid transmission, wherein the coupling device (3) has a coupling device housing (4) for torque-supporting connection of a transmission torque-supporting element (5), in particular a transmission housing, of the transmission to a drive torque-supporting element of the drive device, in particular to a drive housing, and a transmission shaft (7) mounted rotatably within the coupling device housing (4), wherein a fastening means (13), in particular the screw heads of fastening screws, for fastening the coupling device housing (4) to the transmission housing is arranged or can be arranged in such a manner that it is concealed by a system (20) to be driven and is therefore no longer directly accessible after the coupling device (3), in particular together with the transmission (2), has been fastened to the system (20) to be driven,
**characterized in that** the transmission shaft has an output end (10) which is designed and intended to be operatively coupled to a transmission input (11) of the transmission (2), and the transmission shaft has a drive end (12) which is designed and intended to be connected, in particular with a force fit, to an output shaft of the torque-input drive device for rotation therewith.

2. Coupling device (3) according to Claim 1, **characterized in that** the fastening means (13) is arranged in such a manner that the fastening means (13) is no longer directly accessible from an outer side of the coupling device housing (4) after the coupling device (3), in particular together with a transmission (2), has been fastened to a system to be driven.

3. Coupling device (3) according to Claim 1 or 2, **characterized in that**
a. the coupling device housing (4) has an intermediate portion (16) which is arranged between a first fastening portion (17), which is directly connected in the installed state to the drive torque-supporting element, and a second fastening portion, which is directly connected in the installed state to the transmission torque-supporting element (5), or **in that**
b. the coupling device housing (4) has an intermediate portion which is arranged between a first fastening portion (17), which is directly connected in the installed state to the drive torque-supporting element, and a second fastening portion (18), which is directly connected in the installed state to the transmission torque-supporting element (5), wherein the first fastening portion (17) and the second fastening portion (18) are arranged at mutually opposite axial ends of the coupling device housing (4), or **in that**
c. the coupling device housing (4) has an intermediate portion which is arranged between a first fastening portion (17), which is directly connected in the installed state to the drive torque-supporting element, and a second fastening portion (18), which is directly connected in the installed state to the transmission torque-supporting element (5), wherein the fastening means (13) is no longer directly accessible from an outer side of the intermediate portion (16) after the coupling device (3) has been fastened together, in particular together with a transmission (2), to a system (20) to be driven.

4. Coupling device (3) according to one of Claims 1 to 3, **characterized in that** the fastening means (13) has at least one fastening screw (14).

5. Coupling device (3) according to Claim 4, **characterized in that**
a. the coupling device housing (4) has at least one threaded bore (15) which begins in particular on the end side and into which the fastening screw (14) can be screwed, or **in that**
b. the coupling device housing (4) has at least one threaded bore (15) which begins in particular on the end side, runs in the axial direction and into which the fastening screw (14) can be screwed.

6. Coupling device (3) according to one of Claims 1 to 5, **characterized in that** the coupling device housing (4) has a plurality of further threaded bores (21) which are arranged along an end-side circumferential edge of the coupling device housing (4).

7. Coupling device (3) according to one of Claims 1 to 6, **characterized in that**
a. the coupling device housing (4) is rotationally symmetrical, and/or **in that**
b. the coupling device housing (4) externally is in the shape of a bell or a truncated cone.

8. Coupling device (3) according to one of Claims 1 to 7, **characterized in that**
a. the coupling device housing (4) has a continuously running external contour in a cross-sectional plane along the axial direction, and/or **in that**
b. the coupling device housing (4) is free from edges and/or free from protrusions and/or free from depressions.

9. Coupling device (3) according to one of Claims 1 to 8, **characterized in that**
a. the coupling device housing (4) is produced from steel or from titanium or from stainless steel or from aluminium, or **in that** the coupling device housing (4) is produced from a material which contains steel or titania or stainless steel or aluminium, and/or **in that**
b. the coupling device housing (4) is coated or is anodized or is burnished at least on the outer side.

10. Coupling device (3) according to one of Claims 5 to 9, **characterized in that** the coupling device housing (4) is shaped in such a manner that, in particular by introduction of a peripheral fold, a flange can be formed retrospectively on the end side, through which flange the threaded bores (15) and/or the further threaded bores (21) run as through bores (23) .

11. Coupling device (3) according to one of Claims 1 to 10, **characterized in that** the transmission shaft (7) is mounted rotatably by means of at least one rolling bearing (6).

12. Transmission system which contains a transmission (2) and a coupling device (3) according to one of Claims 1 to 11.

13. Transmission system according to Claim 12, **characterized in that** the transmission (2) is a cycloid transmission.

14. Drive system which contains a torque-input drive device and a transmission system according to Claim 12 or 13.

15. Drive system according to Claim 14, **characterized in that** the drive device is an, in particular electric, drive motor, or **in that** the drive device has an, in particular electric, drive motor, or **in that** the drive device is a geared motor or has a geared motor.

## Revendications

1. Dispositif d'accouplement (3) destiné à accoupler en transmission de couple un dispositif d'entraînement à injection de couple, en particulier un moteur d'entraînement, à une transmission (2), en particulier à une transmission cycloïdale, le dispositif d'accouplement (3) comportant un boîtier de dispositif d'accouplement (4) destiné à établir une liaison d'appui de couple d'un élément d'appui de couple de transmission (5), en particulier un boîtier de transmission, de la transmission avec un élément d'appui de couple d'entraînement du dispositif d'entraînement, en particulier un boîtier d'entraînement, et un arbre de transmission (7) monté de manière rotative à l'intérieur du boîtier de dispositif d'accouplement (4),
un moyen de fixation (13), en particulier les têtes de vis de fixation, destinées à fixer le boîtier de dispositif d'accouplement (4), étant disposé ou pouvant être disposé sur le boîtier de transmission de manière à ce qu'il soit recouvert par un système (20) à entraîner et ne soit donc plus directement accessible après que le dispositif d'accouplement (3) a été fixé, en particulier conjointement avec la transmission (2), au système (20) à entraîner, **caractérisé en ce que** l'arbre de transmission comporte une extrémité de sortie (10) qui est conçue et prévue pour être accouplée fonctionnellement à une entrée de transmission (11) de la transmission (2), et l'arbre de transmission comporte une extrémité d'entraînement (12) qui est conçue et prévue pour être reliée solidairement en rotation, en particulier par une liaison en force, à un arbre de sortie du dispositif d'entraînement à injection de couple.

2. Dispositif d'accouplement (3) selon la revendication 1, **caractérisé en ce que** le moyen de fixation (13) est disposé de manière à ce que le moyen de fixation (13) ne soit plus directement accessible depuis un côté extérieur du boîtier de dispositif d'accouplement (4) après que le dispositif d'accouplement (3) a été fixé, en particulier conjointement avec une transmission (2), à un système à entraîner.

3. Dispositif d'accouplement (3) selon la revendication 1 ou 2, **caractérisé en ce que**
a. le boîtier de dispositif d'accouplement (4) comporte une portion intermédiaire (16) qui est disposée entre une première portion de fixation (17), qui est reliée directement à l'élément d'appui de couple d'entraînement à l'état monté, et une deuxième portion de fixation qui est reliée directement à l'élément d'appui de couple de transmission (5) à l'état monté, ou
b. le boîtier de dispositif d'accouplement (4) comporte une portion intermédiaire qui est disposée entre une première portion de fixation (17), qui est reliée directement à l'élément d'appui de couple d'entraînement à l'état monté, et une deuxième portion de fixation (18), qui est reliée directement à l'élément d'appui de couple de transmission (5) à l'état monté, la première portion de fixation (17) et la portion de fixation (18) étant disposées à des extrémités axiales opposées du boîtier de dispositif d'accouplement (4), ou
c. le boîtier de dispositif d'accouplement (4) comporte une portion intermédiaire qui est disposée entre une première portion de fixation (17), qui est reliée directement à l'élément d'appui de couple d'entraînement à l'état monté, et une deuxième portion de fixation (18), qui est reliée directement à l'élément d'appui de couple de transmission (5) à l'état monté, le moyen de fixation (13) n'est plus directement accessible depuis un côté extérieur de la portion intermédiaire (16) après que le dispositif d'accouplement (3) a été fixé, en particulier conjointement avec une transmission (2), à un système (20) à entraîner.

4. Dispositif d'accouplement (3) selon l'une des revendications 1 à 3, **caractérisé en ce que** le moyen de fixation (13) comporte au moins une vis de fixation (14) .

5. Dispositif d'accouplement (3) selon la revendication 4, **caractérisé en ce que**
a. le boîtier de dispositif d'accouplement (4) comporte au moins un trou taraudé (15), en particulier commençant du côté frontal, dans lequel la vis de fixation (14) peut être vissée, ou
b. le boîtier de dispositif d'accouplement (4) comporte au moins un trou taraudé (15) notamment commençant du côté frontal et s'étendant dans la direction axiale, dans lequel la vis de fixation (14) peut être vissée.

6. Dispositif d'accouplement (3) selon l'une des revendications 1 à 5, **caractérisé en ce que** le boîtier de dispositif d'accouplement (4) comporte une pluralité d'autres trous taraudés (21) qui sont disposés le long d'un bord périphérique frontal du boîtier de dispositif d'accouplement (4).

7. Dispositif d'accouplement (3) selon l'une des revendications 1 à 6, **caractérisé en ce que**
a. le boîtier de dispositif d'accouplement (4) est à symétrie de rotation, et/ou
b. le boîtier de dispositif d'accouplement (4) présente à l'extérieur une forme de cloche ou une forme de cône tronqué.

8. Dispositif d'accouplement (3) selon l'une des revendications 1 à 7, **caractérisé en ce que**
a. le boîtier de dispositif d'accouplement (4) présente, dans un plan de coupe transversale le long de la direction axiale, un contour extérieur qui s'étend de manière continue, et/ou
b. le boîtier de dispositif d'accouplement (4) est exempt de bords et/ou exempt de saillies et/ou exempt de dépressions.

9. Dispositif d'accouplement (3) selon l'une des revendications 1 à 8, **caractérisé en ce que**
a. le boîtier de dispositif d'accouplement (4) est en acier ou en titane ou en acier spécial ou en aluminium ou le boîtier de dispositif d'accouplement (4) est en un matériau qui contient de l'acier ou du titane ou de l'acier spécial ou de l'aluminium, et/ou
b. le boîtier de dispositif d'accouplement (4) est pourvu d'un revêtement ou est anodisé ou bruni au moins du côté extérieur.

10. Dispositif d'accouplement (3) selon l'une des revendications 5 à 9, **caractérisé en ce que** le boîtier de dispositif d'accouplement (4) est conformé de manière à ce qu'une bride puisse être formée par la suite du côté extrémité, notamment par introduction d'un pli périphérique, bride à travers laquelle les trous taraudés (15) et/ou les autres trous taraudés (21) s'étendent sous la forme de trous traversants (23) .

11. Dispositif d'accouplement (3) selon l'une des revendications 1 à 10, **caractérisé en ce que** l'arbre de transmission (7) est monté de manière rotative au moyen d'au moins un palier à roulement (6).

12. Système de transmission qui contient une transmission (2) et un dispositif d'accouplement (3) selon l'une des revendications 1 à 11.

13. Système de transmission selon la revendication 12, **caractérisé en ce que** la transmission (2) est une transmission cycloïdale.

14. Système d'entraînement contenant un dispositif d'entraînement à injection de couple et un système de transmission selon la revendication 12 ou 13.

15. Système d'entraînement selon la revendication 14, **caractérisé en ce que** le dispositif d'entraînement est un moteur d'entraînement, notamment électrique, ou **en ce que** le dispositif d'entraînement comporte un moteur d'entraînement, notamment électrique, ou **en ce que** le dispositif d'entraînement est un motoréducteur ou comporte un motoréducteur.
